# EUROPEAN PATENT SPECIFICATION

(11) **EP 3 855 265 B1**
(45) Date of publication and mention of the grant of the patent: **09.08.2023**
(21) Application number: 20152993.0
(22) Date of filing: 21.01.2020
(51) Int. Cl.: G05B 23/02, G05B 19/418, G06F 11/00, G06F 11/36

(54) **ML FOR PROCESS MONITORING**
ML ZUR PROZESSÜBERWACHUNG
APPRENTISSAGE MACHINE POUR LA SURVEILLANCE DE PROCESSUS

(43) Date of publication of application: 28.07.2021
(73) Proprietor: Hexagon Technology Center GmbH, 9435 Heerbrugg (CH)
(72) Inventor: GOSIK, Lukasz, D-88175 Scheidegg (DE)
(74) Representative: Kaminski Harmann

(56) References cited:
- EP-A1- 0 929 854
- EP-B1- 0 929 854
- US-B2- 9 753 835

## Description

The present invention relates to a computer program product and a method for monitoring the behavior of at least one physical process.

Physical processes deviate once in a while from desired behavior. In such a case, sensor data measuring observables associated to a physical process may be used to infer a changed state of the physical process. Outlier detection methods may be used for such a purpose. Outlier detection methods are well known (Chandola, V., Banerjee, A., & Kumar, V. (2007). Outlier detection: A survey. ACM Computing Surveys, 14, 15.). It is often desirable to operate on data streams, wherein the data streams may correspond to streams of sensor data measuring observables associated to a physical process. Outlier detection methods for such a purpose are known as well (Pokrajac, D., Lazarevic, A., & Latecki, L. J. (2007, March). Incremental local outlier detection for data streams. In 2007 IEEE Symposium on Computational Intelligence and Data Mining (pp. 504-515). IEEE.).

EP 0 929 854 B1 and US 9,753,835 B2 both show distributed control systems with debugging capability.

Sensors recording observables are typically placed at a plurality of different locations. It also might be necessary to monitor different physical processes jointly, for deviating behavior may only be observable by studying the different physical processes in unison. In such a case, letting a user decide about which specific sensors to use for monitoring (parts of) the physical processes may provide sub-optimal monitoring results, as typical users of a physical process may not possess the required knowledge to choose from the available sensors.

It is therefore an objective of the present invention to provide for an improved interface to a user for monitoring (parts of) physical processes.

This objective is achieved by realizing at least part of the features of the independent claims. Features which further develop the invention in an alternative or advantageous manner are described in the dependent patent claims.

The invention relates to a computer program product according to claim 1.

The placement of a debug point on an action determines which subset of the set of physical sub-processes is to be monitored. In the field of general software, debug points are typically also called breakpoints.

The external software typically provides the functionality needed for accessing the hardware realizing physical processes. As such, it may for example comprise device drivers. To the outside, the external software may provide an interface through which hardware may be controlled. To move a Coordinate Measuring Machine (CMM) along one axis, for example, an interface command may be available in the external software, wherein in the command the parameters (axis, movement distance, movement speed) may be specified, for example. The external software may translate such a command into actual instructions for a motor, for example, providing the desired motion of the CMM. The control software implemented in the environment provided by the computer program product according to the invention communicates with physical devices via the external software. Actions may internally comprise source code specifying a sequence of instructions to be sent to software interfaces of (potentially different) external software solutions providing interfaces to different physical processes.

In an embodiment of the computer program product according to the invention, a debug point on an action allows for monitoring the physical state of the subset of the set of physical sub-processes associated to the debug point, wherein the monitored sub-processes comprise sub-processes belonging to physically remote physical processes, wherein the monitoring provides information about the joint physical state of the monitored sub-processes.

An individual action may - using the external software - control (parts of) different physical processes at once. Placing a debug point on an individual action may therefore allow for a joint monitoring of physically remote physical processes. Depending on how an action is structured internally, a joint monitoring of an arbitrary number of physically remote processes can be started by placing a single debug point on the action.

In another embodiment of the computer program product according to the invention, a monitoring function associated to at least one debug point is configured to provide anomaly detection on the stored data associated to the debug point, wherein anomalies in the stored data are identified by the monitoring function, the anomalies relating to physical changes in the subset of the set of physical sub-processes associated to the debug point.

In another embodiment of the computer program product according to the invention, the monitoring function implements an online unsupervised anomaly detection algorithm, in particular an incremental local outlier factor algorithm, wherein the monitoring function operates on the stream of sensor data recording observables which depend on the subset of the set of physical sub-processes associated to the debug point to which the monitoring function is associated.

In another embodiment of the computer program product according to the invention, the monitoring function implements a rule-based anomaly detection algorithm, wherein the monitoring function operates on the stream of sensor data recording observables which depend on the subset of the set of physical sub-processes associated to the debug point to which the monitoring function is associated, wherein the rules are adapted to the action on which the debug point is placed.

Different rules may be explicitly encoded into the monitoring function. The monitoring function may, for example, compute statistics of the sensor data which it accesses. Using such statistics and pre-encoded rules, the monitoring function may detect anomalies or changes in the monitored physical sub-processes.

In another embodiment of the computer program product according to the invention, are associated to each other via a graph, wherein a debug point is represented by a pin placed on an action.

The computer program product may provide for a graphical environment, in which actions can be assembled via drag-and-drop operations from a list of available actions. Treating actions as nodes of a graph and connecting the nodes in a desired manner, different physical processes may be executed by the control software.

In another embodiment of the computer program product according to the invention, upon the detection of an anomaly associated to a debug point, a visual change in the pin representing the debug point is displayed in the graphical user interface.

Once an anomaly or general change has been detected, the computer program product according to the invention may change some graphical feature of the pin representing the debug point for which the anomaly or change was detected. The change is preferentially embodied in such a way as to be easily visible by a user of the control software. Besides graphical changes in the pin, text notifications about the detected anomaly or general change may be provided as well.

In another embodiment of the computer program product according to the invention, different graphical forms of the pin representing the debug point are associated to different monitoring functions.

Different shapes or colors of pins may be used for differentiating different monitoring functions. It may also be possible to place multiple different debug points onto a single action, wherein the different debug points may be associated to different monitoring functions. In this way, different aspects of the behavior of (parts of) at least one physical process may be monitored jointly.

Another embodiment of the computer program product according to the invention is defined in claim 9.

The invention also relates to a method for monitoring the behavior of at least one physical sub-process using the computer program product according to the invention, a user placing a debug point with a paired monitoring function on an action to which is associated the at least one physical sub-process, and providing information about the behavior of the at least one physical sub-process with the monitoring function by analyzing the sensor data recording observables which are related to the at least one physical sub-process associated to the debug point.

A user assembling a control software in the environment provided by the computer program product according to the invention may place a debug point on an action which should be monitored. Depending on the type of debug point placed on the action, the user may choose to monitor different aspects of the behavior of the physical processes which are at least partly influenced by the action on which the debug point is placed.

The inventive system is described below in more detail purely by way of example with the aid of concrete exemplary embodiments illustrated schematically in the drawings, further advantages of the invention also being examined. Identical elements are labelled with the same reference numerals in the figures. In detail:

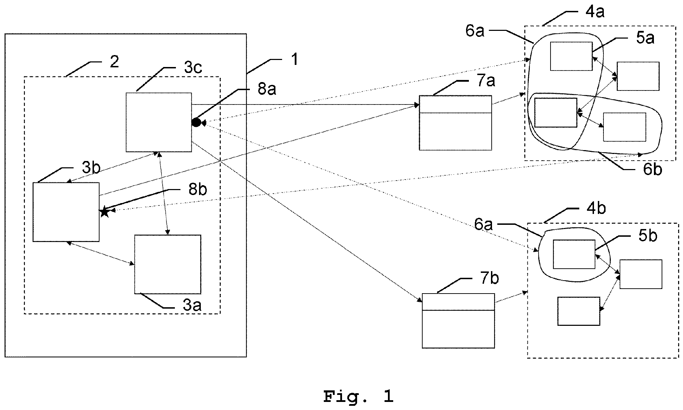

- Figure 1: shows a schematic and illustrative depiction of the invention.

**Figure 1** shows a schematic and illustrative depiction of the invention. The computer program product according to the invention provides an environment 1 in which control software 2 may be executed. The control software 2 is used for controlling at least one physical process 4a,4b, wherein the control proceeds indirectly through external software 7a,7b, wherein the control software 2 calls the external software 7a,7b to control the execution of the at least one physical process 4a,4b. The control software 2 itself is assembled from modular blocks termed actions 3a,3b,3c. In Figure 1, an exemplary illustration with three actions 3a,3b,3c is given. A graphical connection between different actions 3a,3b,3c determines the control software 2. Actions 3a,3b,3c may be connected in a bidirectional manner, or information may only flow in one direction from one action to another. Actions may communicate with the external software 7a,7b via interfaces provided by the external software 7a,7b. An action 3b,3c may communicate with the external software 7a, or an action 3a may only provide internal functionality for the control software 2.

A physical process 4a,4b may comprise physical sub-processes 5a,5b. Each physical process 4a,4b may comprise a different number of physical sub-processes 5a,5b. The physical sub-processes 5a,5b are typically influencing each other, wherein influencing is depicted in Figure 1 via bidirectional graph connections between physical sub-processes 5a,5b.

An individual action 3c may at least partially control a plurality of physical processes 4a,4b. An action 3b,3c may control a subset 6a,6b,6c of physical sub-processes 5a,5b, wherein the controlled subset may comprise physical sub-processes corresponding to different physical processes. The "action" abstraction provided by the computer program product according to the invention therefore allows for distinct physical processes to be controlled at once using an individual action 3c.

Sensors record physical observables related to physical sub-processes 5a,5b. A control software 2 defined by an action graph controls at least one physical process 4a,4b. If a set of pre-defined actions are available to a user, the association of which physical sub-processes 5a,5b are influenced by which action may be pre-stored on the computing unit on which the control software is executed. A user graphically assembling a control software 2 therefore may not need to know about the associations of physical sub-processes 5a,5b to actions 3a,3b,3c. Such knowledge is encoded in the actions themselves. Having abstracted away the close connection between physical sub-processes 5a,5b and actions 3a,3b,3c, the user of the control software 2 may decide to monitor the behavior of the (parts of) physical processes 4a,4b influenced by an action. The user, however, does not need to know which physical sub-processes 5a,5b are specifically influenced by the action he chooses to monitor. Monitoring proceeds then by analyzing the sensor data provided by sensors associated to the physical sub-processes 5a,5b associated to the monitored action.

Monitoring may proceed in different forms. One way is unsupervised monitoring, wherein monitoring may be provided by a model which attempts to detect changes or outliers in the sensor data on which it operates. Such an unsupervised monitoring may operate directly on the stream of sensor data in an online fashion, or it may use stored sensor data for detecting anomalies that might have occurred in the past. In the latter case, monitoring an action requires allocating memory on a computing unit, wherein the memory may be typically allocated in a dynamic way, wherein the required amount of memory may depend on the length of the execution time of the monitored action. The monitoring method may, for example, be embodied as the incremental local outlier detection algorithm.

Monitoring may also be provided as supervised monitoring. For supervised monitoring, examples of typical failures and normal behavior of the physical sub-processes 5a,5b associated to a monitored action may have been gathered, and a supervised model might have been trained to detect normal or abnormal behavior of the monitored physical sub-processes 5a,5b.

Monitoring functionality is provided by the computer program product 1 according to the invention by enabling debug points 8a,8b which can be placed on individual actions 3a,3b,3c. A debug point 8a,8b may be represented by a pin, wherein different shapes or colors of pins may be provided by the computer program product 1 according to the invention. Different types of pins representing debug points 8a,8b may be associated to different monitoring functions. A debug point 8a,8b according to the invention placed on an action by a user does not stop the execution of the at least one physical process 4a,4b controlled by the control software 2. Instead, the monitoring function associated to the placed debug point 8a,8b monitors the sensor data provided by the sensors recording observables of the physical sub-processes 5a,5b associated to the action 3b,3c on which the debug point 8a,8b is placed. The computer program product according to the invention may restrict the actions on which debug points 8a,8b can be placed by a user, for example by requiring that actions on which debug points can be placed influence at least one physical process 4a,4b.

The pairing between debug points 8a,8b and monitoring functions according to the invention may enable a user to monitor (parts of) physical processes 4a,4b without knowing the detailed structure of processes. The graphical environment 1 provided by the computer program product according to the invention may allow for rapid and intuitive development of control software 2, wherein complicated interactions between different physical processes 4a,4b may be simply monitored by placing debug points 8a,8b according to the invention on actions 3a,3b,3c considered to be important by a user of the control software 2. It goes without saying that the illustrated figure is merely a schematic of possible exemplary embodiments.

Although the invention is illustrated above, partly with reference to some preferred embodiments, it must be understood that numerous modifications and combinations of different features of the embodiments can be made.

## Claims

1. Computer program product comprising instructions which, when the program is executed by a computing unit, cause the computing unit to provide an environment (1) with a graphical user interface to a user and to execute a control software (2) in the environment (1), wherein the control software (2)
- is configured to control physical processes (4a, 4b) via external software (7a, 7b), wherein each controlled physical process (4a, 4b) is decomposable into at least one physical sub-process (5a, 5b), the physical sub-processes (5a, 5b) of the controlled physical processes (4a, 4b) combinable into a nonempty set of physical sub-processes, and
- is composed of actions (3a, 3b, 3c) and determined by a number and type of actions (3a, 3b, 3c) and associations between the actions, each action being an elementary building block,
wherein
- the environment enables the user to graphically assemble the control software (2) and to input monitoring information relating to which physical sub-processes (5a, 5b) from the set of physical sub-processes are to be monitored; and
- the external software (7a, 7b) provides interfaces through which the actions (3a, 3b, 3c) may communicate with the external software,
**characterized in that**
- the monitoring information comprises debug points (8a, 8b), wherein the environment enables the user to place a debug point (8a, 8b) on each action (3b, 3c) to which a nonempty subset (6a, 6b, 6c) of the set of physical sub-processes is associated,
- sensor data recording observables are stored in a memory, which observables depend on a subset (6a, 6b, 6c) of the set of physical sub-processes associated to one of the debug points (8a, 8b), wherein the sensor data are stored in such a way in the memory that the stored sensor data are related to the debug point (8a, 8b), and
- to each debug point (8a, 8b) a monitoring function is associated, the monitoring function having access to those parts of the memory that comprise sensor data related to the debug point (8a, 8b) to which the monitoring function is associated, wherein each monitoring function provides an indication in the graphical user interface about a physical state of the subset (6a, 6b, 6c) of the set of physical sub-processes associated to the debug point (8a, 8b) to which the monitoring function is associated.

2. Computer program product according to claim 1,
**characterized in that**
a debug point (8a, 8b) on an action (3b, 3c) allows for monitoring the physical state of the subset (6a, 6b, 6c) of the set of physical sub-processes associated to the debug point, wherein the monitored sub-processes (6a, 6b, 6c) comprise sub-processes belonging to physically remote physical processes, wherein the monitoring provides information about the joint physical state of the monitored sub-processes.

3. Computer program product according to claim 1 or 2,
**characterized in that**
a monitoring function associated to at least one debug point (8a, 8b) is configured to provide anomaly detection on the stored data associated to the debug point, wherein anomalies in the stored data are identified by the monitoring function, the anomalies relating to physical changes in the subset (6a, 6b, 6c) of the set of physical sub-processes associated to the debug point.

4. Computer program product according to claim 3,
**characterized in that**
the monitoring function implements an online unsupervised anomaly detection algorithm, in particular an incremental local outlier factor algorithm, wherein the monitoring function operates on the stream of sensor data recording observables which depend on the subset (6a, 6b, 6c) of the set of physical sub-processes associated to the debug point (8a, 8b) to which the monitoring function is associated.

5. Computer program product according to claim 3,
**characterized in that**
the monitoring function implements a rule-based anomaly detection algorithm, wherein the monitoring function operates on the stream of sensor data recording observables which depend on the subset (6a, 6b, 6c) of the set of physical sub-processes associated to the debug point (8a, 8b) to which the monitoring function is associated, wherein the rules are adapted to the action on which the debug point is placed.

6. Computer program product according to any of the preceding claims,
**characterized in that**
actions (3a, 3b, 3c) are associated to each other via a graph, wherein a debug point (8a, 8b) is represented by a pin placed on an action (3b, 3c).

7. Computer program product according to claim 7,
**characterized in that**
upon the detection of an anomaly associated to a debug point (8a, 8b), a visual change in the pin representing the debug point is displayed in the graphical user interface (1).

8. Computer program product according to claims 6 or 7,
**characterized in that**
different graphical forms of the pin representing the debug point (8a, 8b) are associated to different monitoring functions.

9. Computer program product according to any one of the preceding claims,
**characterized in that**
assembling the control software (2) comprises assembling actions (3a, 3b, 3c) via drag-and-drop operations from a list of available actions.

10. Method for monitoring the behavior of at least one physical sub-process using the computer program product according to any of the preceding claims,
**characterized by**
placing a debug point (8a, 8b) with a paired monitoring function on an action (3b, 3c) to which is associated the at least one physical sub-process (6a, 6b, 6c), and providing information about the behavior of the at least one physical sub-process with the monitoring function by analyzing the sensor data recording observables which are related to the at least one physical sub-process associated to the debug point.

## Patentansprüche

1. Computerprogrammprodukt, umfassend Anweisungen, die, wenn das Programm von einer Recheneinheit ausgeführt wird, die Recheneinheit dazu veranlassen, einem Benutzer eine Umgebung (1) mit einer graphischen Benutzeroberfläche bereitzustellen und eine Steuersoftware (2) in der Umgebung (1) auszuführen, wobei die Steuersoftware (2)
- dazu konfiguriert ist, physikalische Prozesse (4a, 4b) über externe Software (7a, 7b) zu steuern, wobei jeder gesteuerte physikalische Prozess (4a, 4b) in mindestens einen physikalischen Teilprozess (5a, 5b) zerlegbar ist, wobei die physikalischen Teilprozesse (5a, 5b) der gesteuerten physikalischen Prozesse (4a, 4b) zu einem nicht leeren Satz von physikalischen Teilprozessen kombinierbar sind, und
- aus Handlungen (3a, 3b, 3c) besteht und durch eine Anzahl und Art von Handlungen (3a, 3b, 3c) und Verbindungen zwischen den Handlungen bestimmt wird, wobei jede Handlung ein elementarer Grundbaustein ist,
wobei
- die Umgebung es dem Benutzer ermöglicht, die Steuersoftware (2) graphisch zusammenzustellen und Überwachungsinformationen in Bezug darauf einzugeben, welche physikalischen Teilprozesse (5a, 5b) aus dem Satz physikalischer Teilprozesse zu überwachen sind; und
- die externe Software (7a, 7b) Schnittstellen bereitstellt, durch die die Handlungen (3a, 3b, 3c) mit der externen Software kommunizieren können,
**dadurch gekennzeichnet, dass**
- die Überwachungsinformationen Fehlerbehebungspunkte (8a, 8b) umfassen, wobei die Umgebung es dem Benutzer ermöglicht, einen Fehlerbehebungspunkt (8a, 8b) an jeder Handlung (3b, 3c) zu platzieren, der ein nicht leerer Teilsatz (6a, 6b, 6c) des Satzes physikalischer Teilprozesse zugeordnet ist,
- Sensordaten, die Beobachtungsgrößen aufzeichnen, in einem Speicher gespeichert sind, wobei die Beobachtungsgrößen von einem Teilsatz (6a, 6b, 6c) des Satzes physikalischer Teilprozesse abhängen, die einem der Fehlerbehebungspunkte (8a, 8b) zugeordnet sind, wobei die Sensordaten derart in dem Speicher gespeichert sind, dass sich die gespeicherten Sensordaten auf den Fehlerbehebungspunkt (8a, 8b) beziehen, und
- jedem Fehlerbehebungspunkt (8a, 8b) eine Überwachungsfunktion zugeordnet ist, wobei die Überwachungsfunktion Zugriff auf die Teile des Speichers hat, die Sensordaten umfassen, die sich auf den Fehlerbehebungspunkt (8a, 8b) beziehen, dem die Überwachungsfunktion zugeordnet ist, wobei jede Überwachungsfunktion eine Angabe in der graphischen Benutzeroberfläche über einen physikalischen Zustand des Teilsatzes (6a, 6b, 6c) des Satzes physikalischer Teilprozesse bereitstellt, der dem Fehlerbehebungspunkt (8a, 8b) zugeordnet ist, der der Überwachungsfunktion zugeordnet ist.

2. Computerprogrammprodukt nach Anspruch 1,
**dadurch gekennzeichnet, dass**
ein Fehlerbehebungspunkt (8a, 8b) an einer Handlung (3b, 3c) ein Überwachen des physikalischen Zustands des Teilsatzes (6a, 6b, 6c) des Satzes physikalischer Teilprozesse ermöglicht, der dem Fehlerbehebungspunkt zugeordnet ist, wobei die überwachten Teilprozesse (6a, 6b, 6c) Teilprozesse umfassen, die zu physikalisch entfernten physikalischen Prozessen gehören, wobei die Überwachung Informationen über den gemeinsamen physikalischen Zustand der überwachten Teilprozesse bereitstellt.

3. Computerprogrammprodukt nach Anspruch 1 oder 2,
**dadurch gekennzeichnet, dass**
eine Überwachungsfunktion, die mindestens einem Fehlerbehebungspunkt (8a, 8b) zugeordnet ist, dazu konfiguriert ist, eine Anomaliedetektion an den gespeicherten Daten bereitzustellen, die dem Fehlerbehebungspunkt zugeordnet sind, wobei Anomalien in den gespeicherten Daten durch die Überwachungsfunktion identifiziert werden, wobei sich die Anomalien auf physikalische Änderungen des Teilsatzes (6a, 6b, 6c) des Satzes physikalischer Teilprozesse beziehen, der dem Fehlerbehebungspunkt zugeordnet ist.

4. Computerprogrammprodukt nach Anspruch 3,
**dadurch gekennzeichnet, dass**
die Überwachungsfunktion einen unüberwachten Online-Anomaliedetektionsalgorithmus implementiert, insbesondere einen inkrementellen Local-Outlier-Factor-Algorithmus, wobei die Überwachungsfunktion an dem Strom von Sensordaten arbeitet, die Beobachtungsgrößen aufzeichnen, die von dem Teilsatz (6a, 6b, 6c) des Satzes physikalischer Teilprozesse abhängen, der dem Fehlerbehebungspunkt (8a, 8b) zugeordnet ist, dem die Überwachungsfunktion zugeordnet ist.

5. Computerprogrammprodukt nach Anspruch 3,
**dadurch gekennzeichnet, dass**
die Überwachungsfunktion einen regelbasierten Anomaliedetektionsalgorithmus implementiert, wobei die Überwachungsfunktion an dem Strom von Sensordaten arbeitet, die Beobachtungsgrößen aufzeichnen, die von dem Teilsatz (6a, 6b, 6c) des Satzes physikalischer Teilprozesse abhängen, der dem Fehlerbehebungspunkt (8a, 8b) zugeordnet ist, dem die Überwachungsfunktion zugeordnet ist, wobei die Regeln an die Handlung angepasst sind, an der der Fehlerbehebungspunkt platziert ist.

6. Computerprogrammprodukt nach einem der vorhergehenden Ansprüche,
**dadurch gekennzeichnet, dass**
Handlungen (3a, 3b, 3c) über einen Graphen einander zugeordnet sind, wobei ein Fehlerbehebungspunkt (8a, 8b) durch einen Pin dargestellt wird, der an einer Handlung (3b, 3c) platziert ist.

7. Computerprogrammprodukt nach Anspruch 7,
**dadurch gekennzeichnet, dass**
bei der Detektion einer Anomalie, die einem Fehlerbehebungspunkt (8a, 8b) zugeordnet ist, eine visuelle Änderung des Pins, der den Fehlerbehebungspunkt darstellt, in der graphischen Benutzeroberfläche (1) angezeigt wird.

8. Computerprogrammprodukt nach Anspruch 6 oder 7,
**dadurch gekennzeichnet, dass**
verschiedene graphische Formen des Pins, der den Fehlerbehebungspunkt (8a, 8b) darstellt, verschiedenen Überwachungsfunktionen zugeordnet sind.

9. Computerprogrammprodukt nach einem der vorhergehenden Ansprüche,
**dadurch gekennzeichnet, dass**
das Zusammenstellen der Steuersoftware (2) Zusammenstellungshandlungen (3a, 3b, 3c) über Drag-and-Drop-Operationen aus einer Liste verfügbarer Handlungen umfasst.

10. Verfahren zum Überwachen des Verhaltens mindestens eines physikalischen Teilprozesses unter Verwendung des Computerprogrammprodukts nach einem der vorhergehenden Ansprüche,
**gekennzeichnet durch**
Platzieren eines Fehlerbehebungspunkts (8a, 8b) mit einer gepaarten Überwachungsfunktion an einer Handlung (3b, 3c), der der mindestens eine physikalische Teilprozess (6a, 6b, 6c) zugeordnet ist, und Bereitstellen von Informationen über das Verhalten des mindestens einen physikalischen Teilprozesses mit der Überwachungsfunktion **durch** Analysieren der Sensordaten, die Beobachtungsgrößen aufzeichnen, die sich auf den mindestens einen physikalischen Teilprozess beziehen, der dem Fehlerbehebungspunkt zugeordnet ist.

## Revendications

1. Produit-programme d'ordinateur comprenant des instructions qui, lorsque le programme est exécuté par une unité informatique, amènent l'unité informatique à fournir un environnement (1) avec une interface utilisateur graphique à un utilisateur et à exécuter un logiciel de commande (2) dans l'environnement (1), dans lequel le logiciel de commande (2)
- est configuré pour commander des processus physiques (4a, 4b) via un logiciel extérieur (7a, 7b), dans lequel chaque processus physique (4a, 4b) commandé est décomposable en au moins un sous-processus physique (5a, 5b), les sous-processus physiques (5a, 5b) des processus physiques (4a, 4b) commandés étant combinables en un ensemble non vide de sous-processus physiques, et
- est composé d'actions (3a, 3b, 3c) et déterminé par un nombre et un type d'actions (3a, 3b, 3c) et des associations entre les actions, chaque action étant un bloc de construction élémentaire,
dans lequel
- l'environnement permet à l'utilisateur d'assembler graphiquement le logiciel de commande (2) et d'entrer des informations de surveillance relatives aux sous-processus physiques (5a, 5b) de l'ensemble de sous-processus physiques qui doivent être surveillés ; et
- le logiciel extérieur (7a, 7b) fournit des interfaces par le biais desquelles les actions (3a, 3b, 3c) peuvent communiquer avec le logiciel extérieur,
caractérisé en ce
- les informations de surveillance comprennent des points de débogage (8a, 8b), dans lequel l'environnement permet à l'utilisateur de placer un point de débogage (8a, 8b) sur chaque action (3b, 3c) à laquelle est associé un sous-ensemble non vide (6a, 6b, 6c) de l'ensemble de sous-processus physiques,
- des données de capteur enregistrant des variables observables sont stockées dans une mémoire, lesquelles variables observables dépendent d'un sous-ensemble (6a, 6b, 6c) de l'ensemble de sous-processus physiques associé à l'un des points de débogage (8a, 8b), dans lequel les données de capteur sont stockées dans la mémoire de manière à ce que les données de capteur stockées soient liées au point de débogage (8a, 8b), et
- à chaque point de débogage (8a, 8b) est associée une fonction de surveillance, la fonction de surveillance ayant accès à ces parties de la mémoire qui comprennent des données de capteur liées au point de débogage (8a, 8b) auquel est associée la fonction de surveillance, dans lequel chaque fonction de surveillance fournit une indication dans l'interface utilisateur graphique concernant un état physique du sous-ensemble (6a, 6b, 6c) de l'ensemble de sous-processus physiques associé au point de débogage (8a, 8b) auquel est associée la fonction de surveillance.

2. Produit-Programme d'ordinateur selon la revendication 1,
**caractérisé en ce que**
un point de débogage (8a, 8b) sur une action (3b, 3c) permet la surveillance de l'état physique du sous-ensemble (6a, 6b, 6c) de l'ensemble de sous-processus physiques associé au point de débogage, dans lequel les sous-processus (6a, 6b, 6c) surveillés comprennent des sous-processus appartenant à des processus physiques distants physiquement, dans lequel la surveillance fournit des informations concernant l'état physique conjugué des sous-processus surveillés.

3. Produit-programme d'ordinateur selon la revendication 1 ou 2,
**caractérisé en ce que**
une fonction de surveillance associée à au moins un point de débogage (8a, 8b) est configurée pour fournir une détection d'anomalie sur les données stockées associées au point de débogage, dans lequel des anomalies dans les données stockées sont identifiées par la fonction de surveillance, les anomalies étant relatives à des changements physiques du sous-ensemble (6a, 6b, 6c) de l'ensemble de sous processus physiques associé au point de débogage.

4. Produit-programme d'ordinateur selon la revendication 3,
**caractérisé en ce que**
la fonction de surveillance met en oeuvre un algorithme de détection d'anomalie non supervisée en ligne, en particulier un algorithme de facteur d'observation aberrante locale incrémentiel, dans lequel la fonction de surveillance fonctionne sur le flux de données de capteur enregistrant des variables observables qui dépendent du sous-ensemble (6a, 6b, 6c) de l'ensemble de sous-processus physiques associé au point de débogage (8a, 8b) auquel est associée la fonction de surveillance.

5. Produit-programme d'ordinateur selon la revendication 3,
**caractérisé en ce que**
la fonction de surveillance met en oeuvre un algorithme de détection basé sur des règles, dans lequel la fonction de surveillance fonctionne sur le flux de données de capteur enregistrant des variables observables qui dépendent du sous-ensemble (6a, 6b, 6c) de l'ensemble de sous-processus physiques associé au point de débogage (8a, 8b) auquel est associée la fonction de surveillance, dans lequel les règles sont adaptées à l'action sur laquelle est placé le point de débogage.

6. Produit-programme d'ordinateur selon l'une quelconque des revendications précédentes,
**caractérisé en ce que**
des actions (3a, 3b, 3c) sont associées les unes aux autres via un graphe, dans lequel un point de débogage (8a, 8b) est représenté par une épingle placée sur une action (3b, 3c).

7. Produit-programme d'ordinateur selon la revendication 7,
**caractérisé en ce que**
lors de la détection d'une anomalie associée à un point de débogage (8a, 8b), un changement visuel de l'épingle représentant le point de débogage est affiché dans l'interface utilisateur graphique (1).

8. Produit-programme d'ordinateur selon les revendications 6 ou 7,
**caractérisé en ce que**
des formes graphiques différentes de l'épingle représentant le point de débogage (8a, 8b) sont associées à des fonctions de surveillance différentes.

9. Produit-programme d'ordinateur selon l'une quelconque des revendications précédentes,
**caractérisé en ce que**
l'assemblage du logiciel de commande (2) comprend l'assemblage d'actions (3a, 3b, 3c) via des opérations de glisser-déposer provenant d'une liste d'actions disponibles.

10. Procédé de surveillance du comportement d'au moins un sous-processus physique à l'aide du produit programme d'ordinateur selon l'une quelconque des revendications précédentes,
**caractérisé par**
le placement d'un point de débogage (8a, 8b) avec une fonction de surveillance jumelée sur une action (3b, 3c) à laquelle est associé l'au moins un sous-processus physique (6a, 6b, 6c), et la fourniture d'informations concernant le comportement de l'au moins un sous-processus physique avec la fonction de surveillance par l'analyse des données de capteur enregistrant des variables observables qui sont liées à l'au moins un sous-processus physique associé au point de débogage.
